# EUROPÄISCHE PATENTSCHRIFT

(11) **EP 1 044 117 B1**
(45) Veröffentlichungstag und Bekanntmachung des Hinweises auf die Patenterteilung: **06.02.2002**
(21) Anmeldenummer: 98961032.4
(22) Anmeldetag: 23.10.1998
(51) Int. Cl.: B60R 7/00

(54) **Nachrüstbare Halterung mit einer Aufnahme für Bücher, Karten und dergleichen**
Retrofit holding device for accommodating books, maps or the like
Fixation pouvant être montée à posteriori, munie d'une cavité pour recevoir des livres, des cartes et similaire

(30) Priorität: 03.12.1997 DE 19753647
(43) Veröffentlichungstag der Anmeldung: 18.10.2000
(73) Patentinhaber: Busse, Rido, 89275 Elchingen (DE)
(72) Erfinder: Busse, Rido, 89275 Elchingen (DE)
(74) Vertreter: König, Beate, Dipl.-Phys. Dr.
(86) Internationale Anmeldenummer: DE9803114
(87) Internationale Veröffentlichungsnummer: WO9928155

(56) Entgegenhaltungen:
- DE-A- 3 706 403
- DE-C- 19 605 998
- GB-A- 2 285 788
- US-A- 3 357 614
- US-A- 3 458 095
- US-A- 4 723 748
- US-A- 5 016 847
- US-A- 5 129 615
- US-A- 5 398 856
- US-A- 5 628 439

## Beschreibung

Die Erfindung betrifft eine nachrüstbare Halterung mit einer Aufnahme für Bücher, Karten und dergleichen in Kraftfahrzeugen.

In Kraftfahrzeugen muß außer Reisegepäck, das vorwiegend im Kofferraum untergebracht wird, und Handgepäck Reisematerial in Form von Büchern, Karten und dergleichen mitgeführt werden. Üblich sind Autoatlanten und Straßenkarten, die eingesetzt werden, um die Fahrtroute auszuwählen oder den Weg in unbekannten Gegenden zu finden. Dementsprechend ist es erforderlich, die Autoatlanten und Karten an einem Ort mit gutem Zugriff aufzubewahren. Nicht in Frage kommt gewöhnlich das für derartige Zwecke zu kleine Handschubfach. Vielfach sind an den Seitentüren Aufnahmebereiche vorgesehen, in denen jedoch auch weiteres Material wie Parkscheiben und persönlicher Bedarf untergebracht werden, so daß vielfach der Raum zur Unterbringung eines Autoatlas oder mehrerer Karten fehlt.

In vielen Kraftfahrzeugen ist der Fußraum des Beifahrers reichlich bemessen. Dies wird gelegentlich zur Halterung von Feuerlöschern genutzt, wobei die Halterungen fest in der Kardantunnelwand verankert sind. Ein Schritt zur Lösung des Unterbringungsproblems für Autoatlanten und -karten mag sein, auf entsprechende Weise Halterungen für Bücher, Karten an der Kardantunnelwand anzubringen. Hierzu ist wie im Fall von der Unterbringung von Feuerlöschern ein gewisser Montageaufwand erforderlich.

Eine weitere Halterungsmöglichkeit für Gegenstände besteht nach einem Vorschlag der DE 24 14 136 A1 darin, zwei mit Löchern oder anderen Justierelementen versehene Leisten mit z.B. stabartigen Halterungskörpern in Parallel- oder Überkreuzanordnung auf dem Boden des Fahrgastraums, auf den Sitzen oder im Kofferraum aufzustellen.

Weitere Halterungs- und Unterbringungssysteme sehen eine Unterbringung in einem Behälter zwischen Rücklehnen zweier benachbarter Sitze (DE 35 44 491), zwischen einem mit elastischen Spannelementen versehenen Spannrahmen und einer Fahrzeugwand (DE 42 30 100 A1) und einem länglichen flachen Gehäuse mit Aufnahmeflächen unmittelbar unter dem Fahrzeugdach (DE 31 51 298 A1) vor.

In der gattungsbildenden US 3 458 095 A ist eine nachrüstbare Halterung mit einer Aufnahme für Aufbewahrungsgut wie Bücher, Karten und dergleichen in Kraftfahrzeugen beschrieben, bei der zumindest ein Winkelelement mit zwei Schenkeln vorgesehen ist. Ein erster Schenkel dient als Auflagefuß und der zweite Schenkel als Stützwand. Am Winkelelement ist eine Halterungseinrichtung für die Aufnahme vorgesehen. Es handelt sich hierbei um eine kombinierte Anordnung für eine Papierspenderschachtel und einen Abfallbehälter, bei der die Schachtel und der Behälter herkömmlich sind und einzeln entnommen und eingesetzt werden können. Der Rahmen der Anordnung besteht aus einem Montageteil 30 und einem Tragteil 31. Der Montageteil 30 weist zwei langgestreckte, parallele, beabstandete vertikale Schenkelabschnitte 32, einen querverlaufenden horizontalen Abschnitt 33 und langgestreckte Stiftabschnitte mit vorderer Anspitzung 34, 35 auf. Hergestellt ist er aus Draht, so daß die Stiftabschnitte entsprechend dem Untergrund gebogen werden können. Mittels ihrer Anspitzung durchbohren sie eine Fußbodenmatte M und erstrecken sich durch eine Isolierschicht I. Der Tragteil 31 weist ebenfalls seitlich beabstandete, vertikale Schenkelabschnitte 40 mit einem Fußabschnitt 42 und sich nach oben erstreckenden Armabschnitten 44 auf, auf denen die Schachtel ruht.

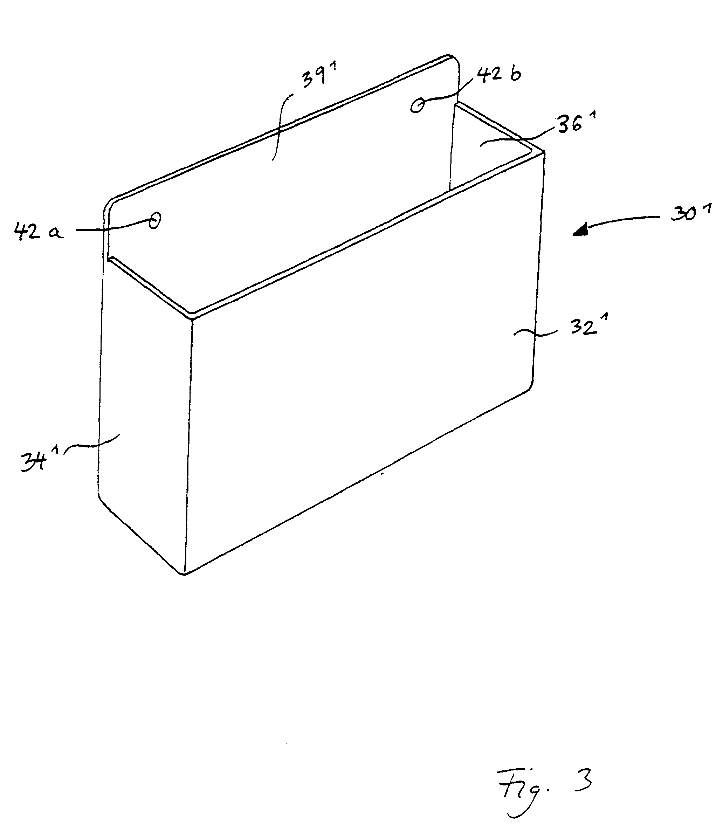

Aus der US 5 016 847 A ist eine Vorrichtung zum Halten von Gegenständen bekannt, die ebenfalls aus Draht hergestellt ist und ein Paar von Haltefüßen 20, 28 aufweist. Gegenüber den Haltefüßen befinden sich weitere vorspringende Abschnitte 30, 46, mit denen gemäß Ansicht von Fig. 2 eine Klemmung bezüglich eines Teppichs erreicht wird, wobei der Teppich 48 durchstoßen wird, bis eine Auflage auf dem Fahrzeugboden 50 erzielt wird.

Gegenstand der US 3 357 640 A ist ein Abfallbehälter mit einer Schenkelhalterung als Fuß. Vorhanden sind zwei untere Schenkel 17, mit denen eine Fußmatte durchstoßen wird. Weiter sind zwei kürzere Schenkel 20 vorgesehen, die zusammen mit den längeren Fußschenkeln 17 eine Klemmung bewirken.

Der Erfindung liegt die Aufgabe zugrunde, eine Halterung mit einer Aufnahme für Bücher, Karten und dergleichen in Kraftfahrzeugen zu schaffen, die einfach nachrüstbar und ohne besonderen Montageaufwand anbringbar ist.

Die Aufgabe ist erfindungsgemäß bei einer Halterung mit den Merkmalen des Anspruchs 1 gelöst. Vorteilhafte Weiterbildungen der erfindungsgemäßen Halterung sind Gegenstand der abhängigen Ansprüche.

Eine erfindungsgemäße nachrüstbare Halterung mit einer Aufnahme für Bücher, Karten und dergleichen in Kraftfahrzeugen umfaßt somit zumindest ein Winkelelement mit zwei Schenkeln, von denen ein erster Schenkel als Auflagefuß und der zweite Schenkel als Stützwand dient, und am Winkelelement eine Aufnahmeeinrichtung vorgesehen ist. Der erste Schenkel ist dabei ein als Stanzteil oder Spritzteil oder Bügel mit vorne geschlossener Form ausgeführtes Einschiebeteil zur Anordnung unter dem Teppich oder der Fußbodenmatte eines Kraftfahrzeuges, wobei die beiden Schenkel des Winkelelements in ihrer Winkelstellung zueinander verstellbar sind.

Die erfindungsgemäße Halterung zeichnet sich dadurch aus, daß keinerlei Montagearbeiten zu ihrer Anbringung erforderlich sind. Dies liegt zum einen daran, daß der erste Schenkel des Winkelelements als Auflagefuß dient, d.h. die Halterung selbst steht. Der zweite Schenkel dient als Stützwand. Für die Aufnahme ist eine Aufnahmeeinrichtung vorgesehen, die zusammen mit dem als Stützwand dienenden zweiten Schenkel des Winkelelements die Bücher, Karten und dergleichen haltert.

Für den Einsatz der Halterung gemäß der Erfindung ist es lediglich erforderlich, den ersten Schenkel des Winkelelements unter den Teppich oder die Fußbodenmatte zu schieben, wobei der zweite Schenkel dann, je nach Bauform der Halterung, aufrecht bzw. im erforderlichen Winkel zum Tunnel der Kardanwelle steht. Vorzugsweise befindet sich die Verbindungszone der beiden Schenkel am Rand des Teppichs oder der Fußbodenmatte, wenn die Halterungseinrichtung ein mit dem Winkelelement verbundenes Teil ist. Das Winkelelement steht durch den aufliegenden Teppich bzw. Flächenkontakt mit der Fußbodenmatte sehr stabil und kann gewöhnlich nur durch Greifen und Zug bzw. Schub in seiner Position verändert werden oder wieder aus dem Eingriff mit dem Teppich oder dergleichen gebracht werden. Ist dann erst ein Atlas oder Kartenmaterial in der Aufnahme untergebracht, ist praktisch jedes Verschieben ohne äußeren Eingriff ausgeschlossen.

Diese Halterung ist außerordentlich preisgünstig nicht nur vom Aspekt der Montage her, sondern sie kann auch aus sehr kostengünstigen Teilen und Materialien hergestellt werden, beispielsweise aus Blech oder Kunststoff (Recyclingmaterial), vorzugsweise unter Verwendung von Materialresten.

Vorzugsweise ist das Halterungsteil auf dem zweiten Schenkel des Winkelelements verschiebbar angeordnet. Dies ermöglicht es, das Halterungsteil nach oben und nach unten zu bewegen, so wie dies für das aufzubewahrende Gut erforderlich ist, d.h. es kann auf diese Weise eine Höhenanpassung an die jeweilige Buchabmessung oder dergleichen vorgenommen werden.

Zur Erzielung eines guten Sitzes der Halterung im Inneren des Kraftfahrzeuges sind vorzugsweise die beiden Schenkel des Winkelelements in ihrer Winkelstellung zueinander verstellbar. Eine einfache Art der Realisierung dieser Verstellbarkeit geschieht dadurch, daß das zweckmäßig einstückige Winkelelement im Bereich der Winkelzone der beiden Schenkel Materialaussparungen aufweist. Durch diese können die beiden Schenkel leicht zueinander hin oder voneinander fortgebogen werden, bis der als Stützwand dienende Schenkel praktisch zur Anlage an den Kardantunnel gelangt. Dann kommt es auch bei starker Belastung durch schwere Atlanten und dergleichen nicht zu einem Kippen der Halterung, auch wenn die Halterungsstabilität durch eine geringere Steifigkeit des Teppiches oder der Fußbodenmatte etwas geringer sein sollte.

Die Materialaussparungen können beispielsweise durch Stanzen im Bereich der Verbindungszone geschaffen werden oder es können Stege oder dergleichen im Fall eines Spritzteiles geschaffen werden, die eine Art Scharnierfunktion ausüben.

Eine besonders einfache Herstellung des Winkelelements ist, wenn dieses als Stanzteil hergestellt wird. Dies ist beispielsweise möglich, wenn Blechreste verwendet werden, so daß das Material für das Winkelelement sehr kostengünstig beschafft werden kann.

Das Winkelelement kann aber auch aus Draht sein, so daß verhältnismäßig wenig Material benötigt wird und sich die Stabilität des Winkelelements durch dessen Drahtskelett ergibt.

Bei einem weiteren Ausführungsbeispiel der Erfindung ist der zweite Schenkel über den ersten Schenkel zurückgebogen und trägt auf dem zurückgebogenen Bereich die Aufnahmeeinrichtung. Hierzu eignet sich insbesondere eine Drahtbügel-Ausführung des Winkelelements, wobei die Aufnahmeeinrichtung dann zweckmäßig als Köcher aus Kunststoff ausgeführt ist.

Statt eines einzigen Winkelelements, das sich praktisch über die gesamte Länge der Halterung erstreckt, können auch zwei oder mehrere einzelne Winkelelemente vorgesehen werden, die beispielsweise miteinander verbunden sind. Außerdem oder alternativ können sie auch durch die Aufnahmeeinrichtung verbunden sein. Dies hat den Vorteil, daß das Winkelelement aus kleineren Materialteilen hergestellt wird und sich einfacher für Transport und Lagerung unterbringen läßt. Die Halterungsstabilität ergibt sich praktisch durch die Verbindung der Winkelelemente und die Aufnahmeeinrichung, die durch die als Stützwand dienenden zweiten Schenkel zusammen getragen wird.

Das Halterungsteil kann in einer Ausführungsform bügelförmig oder U-förmig sein. In dieser Ausführung kann es einerseits seitlich am Winkelelement gehaltert sein und dieses praktisch an dessen Rückseite umgreifen und auch in dieser Form entlang desselben verschiebbar sein. Gleichermaßen ist dies auch bei der U-förmigen Gestalt des Halterungsteils der Fall.

Alternativ kann als Halterungsteil ein U-Doppel-Wandteil vorgesehen sein, das auf den zweiten Schenkel des Winkelements aufsetzbar ist. In dieser Gestalt umgreift es das Winkelelement von oben und ist so in der Vertikalen verschiebbar zur Höhenanpassung an das aufzubewahrende Buch.

Mit dem Halterungsteil ist vorzugsweise eine Aufnahmeeinrichtung verbindbar, so daß eine gute Zerlegbarkeit der Halterung deren Lagerung und Transport vereinfacht.

Alternativ können das Halterungsteil und die Aufnahmeeinrichtung einstückig sein, so daß die Halterung dann nur aus Winkelelement(en) und Halterungsteil mit integrierter Aufnahmeeinrichtung besteht. Es kann auch eine völlig einstückige Ausbildung von Winkelelement und Halterungsteil sowie gegebenenfalls zuzüglich der Aufnahmeeinrichtung vorgesehen sein. Dies hat wiederum den Vorteil, daß nur wenig Teile bevorratet werden müssen.

Eine solche einstückige Ausführung ist beispielsweise gegeben, wenn der erste Schenkel nahe dem Bereich der Verbindungszone eine Aussparung aufweist, durch die das Aufbewahrungsgut gesteckt werden kann, wobei die Seitenstege auf beiden Seiten der Aussparung über den ersten Schenkel zurückgebogen sind und sich der zweite Schenkel nach oben erstreckt. Ein Autoatlas wird dann einfach durch die Aussparung auf den Boden gestellt und liegt dann mit einem Buchdeckel an der einen Aussparungskante und weiter oben ggf. an der Konsole und mit dem anderen Buchdeckel an dem zweiten Schenkel an, der ihn auf diese Weise abstützt. Dieses Ausführungsbeispiel eignet sich gut zur Herstellung als Stanzteil. Perforationen (Materialaussparungen) erleichtern das Umbiegen des zweiten Schenkels.

Sehr zweckmäßig ist die Ausgestaltung der Halterung mit einer Zacken oder ähnliche Vorsprünge aufweisenden Kante für einen Eingriff mit einer Fußmatte oder dergleichen. Mittels der Zacken kann sich die Kante sozusagen in der Fußmatte verbeißen, so daß ein Rutschen der Halterung vermieden wird.

Die Erfindung wird im folgenden weiter anhand mehrerer Ausführungsbeispiele und der Zeichnung beschrieben. Diese Darstellung dient lediglich zur Erläuterung der Erfindung und soll im einzelnen, ebenso wie die Zusammenfassung der Merkmale in den Unteransprüchen, nicht zur Einschränkung der Erfindung herangezogen werden.

In der Zeichnung zeigen:
- Fig. 1: eine auseinandergezogene Ansicht einer erfindungsgemäßen Halterung mit Winkelelement, U-Doppel-Wandförmigem Halterungsteil und bügelförmiger Aufnahmeeinrichtung,
- Fig. 2: die Halterung von Fig. 1 im montierten Zustand,
- Fig. 3: eine zu der bügelförmigen Aufnahmeeinrichtung von Fig. 1 alternative Aufnahmeeinrichtung in Kastenform,
- Fig. 4: eine alternative Halterung, bestehend aus Winkelelement und einstückig ausgebildetem Halterungsteil und Aufnahmeeinrichtung in Bügelform,
- Fig. 5: eine auseinandergezogene Ansicht eines U-Doppel-Wandteils und dazugehöriger bügelförmiger Aufnahmeeinrichtung,
- Fig. 6: eine Abwicklung eines Zuschnitts für eine weitere Halterung in Form eines Blech-Biege-Stanzteils,
- Fig. 7: eine perspektivische Ansicht einer aus dem Zuschnitt von Fig. 6 hergestellten Halterung, zur Veranschaulichung mit eingestelltem Buch,
- Fig. 8: eine perspektivische Ansicht einer Halterung, bestehend aus einem Winkelelement in Form eines Drahtbügels und einer köcherartigen Aufnahmeeinrichtung,
- Fig. 9: eine perspektivische Ansicht einer weiteren Halterung, bestehend aus einem Winkelelement in Form eines Drahtbügels und einer köcherartigen Aufnahmeeinrichtung, und
- Fig. 10: eine perspektivische Ansicht der Halterung von Fig. 9 von unten.

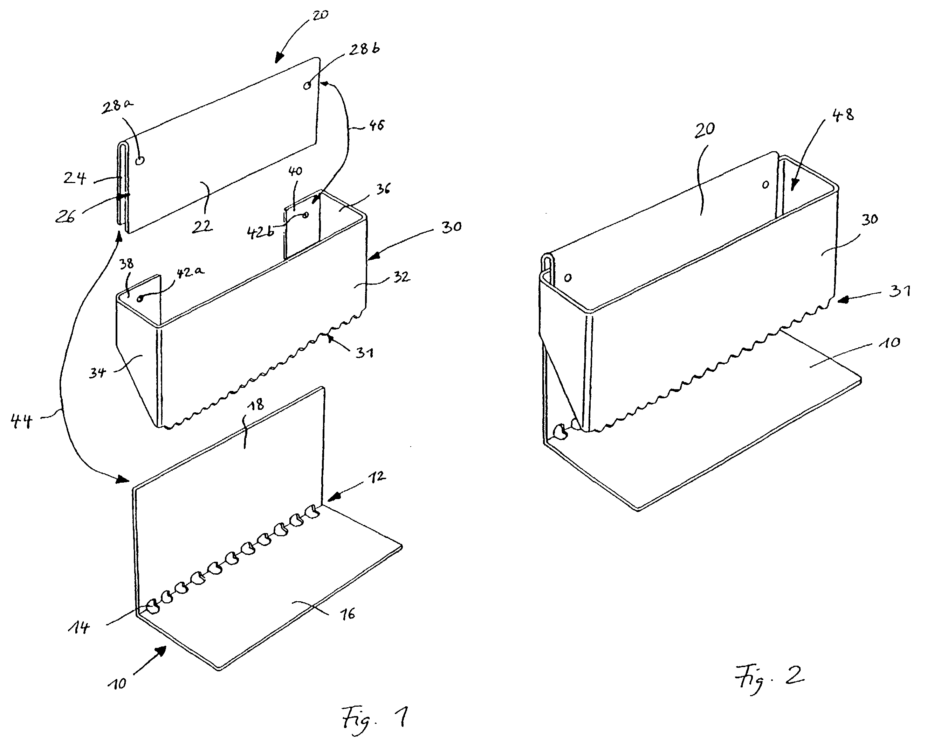

Es wird zunächst das in Fig. 1 und 2 veranschaulichte erste Ausführungsbeispiel der erfindungsgemäßen Halterung beschrieben. Die gezeigte Halterung umfaßt ein Winkelelement 10, ein U-Doppel-Wandteil 20 und eine bügelförmige Aufnahmeeinrichtung 30.

Das Winkelelement 10 ist ein rechteckförmiges Stanzteil aus Metall, das von einer Kante zur anderen entlang einer Richtung des Pfeils 12 verlaufenden Linie Materialaussparungen 14 (Stanzungen) aufweist. Die Linie 12 bildet zugleich eine Achse, um die so gebildeten beiden Schenkel 16, 18 des Winkelelements zueinanderhin bis etwa zu einem Winkel von 90° gebogen sind.

Das Halterungsteil 20 ist im gezeigten Ausführungsbeispiel ebenfalls aus Blech, hier noch sehr viel dünnwandigerem Blech, und zu einem U-Doppel-Wandteil mit einer Vorder- und einer Rückwand 22, 24 gebogen. Zwischen diesen befindet sich lediglich ein sehr schmaler Spalt 26. Im oberen Bereich trägt das Halterungsteil vorne zwei Noppen 28a, 28b. Statt der Noppen 28a, 28b können auch Aussparungen für die Aufnahme von Noppen am Gegenstück, d.h. an der Aufnahmeeinrichtung 30, vorgesehen sein.

Die Aufnahmeeinrichtung 30 ist bügelförmig und weist eine Vorderwand 32, Seitenwände 34, 36 und sich oben von den Seitenwänden 34, 36 einwärts zueinander hin, parallel zur Vorderwand 32 erstreckende Laschenabschnitte 38, 40 auf. Diese tragen mit den Noppen 28a, 28b zusammenpassende Öffnungen 42a, 42b oder Noppen als Gegenstück zu den erwähnten, alternativ am Halterungsteil 20 vorgesehenen Aussparungen. Fig. 2 zeigt, daß die Seitenwände 34, 36 der Aufnahmeeinrichtung nach hinten abgeschrägt sind. Dies ist eine Ausgestaltung, die bewirkt, daß eine Kante mit Spitzen entsteht, die sich im Fußboden (Fußmatte) festkrallen kann. Sie dient weiterhin zur Einsparung von Material. Selbstverständlich könnte die Wand auch bis nach hinten durchgehend sein. An der Unterkante ist die Vorderwand 32 mit Zacken 31 versehen, mittels derer sich der Halterungsteil in der Fußmatte festkrallen kann, so daß die Halterung sicher fixiert ist.

Die Halterung wird wie folgt zusammengesetzt und im Kraftfahrzeuginneren untergebracht. Als erstes wird das Winkelelement mit seinem ersten Schenkel 16 unter dem Teppich oder die Fußbodenmatte vom Kardantunnel her geschoben, bis die Teppichkante an den zweiten Schenkel 18 etwa im Bereich der Linie 12 stößt. Befindet sich der zweite die Stützwand bildende Schenkel 18 in zu großem Abstand von der Wand des Kardantunnels, wird der zweite Schenkel weiter in diese Richtung hin gebogen. Dies ist durch die Stanzöffnungen 14 leicht gemacht. Anschließend wird das Halterungsteil 20, wie durch den Pfeil 44 angedeutet ist, von oben auf den zweiten Schenkel 18 aufgeschoben, bis es sich in der gewünschten Höhe befindet. Schließlich wird die Aufnahmeeinrichtung 30 mit seinen Öffnungen 42a, 42b (oder Noppen) in den Noppen 28a, 28b (oder Öffnungen) des Halterungsteils 20 verankert, wie durch den Pfeil 46 angedeutet ist. Die Halterung ist dann fertig, wie in Fig. 2 gezeigt. Die miteinander verbundenen Halterungs- und Aufnahmeteile 20, 30 können entlang des zweiten Schenkels 18 des Winkelelements 10 zusammen aufwärts und abwärts geschoben werden. In die so gebildete und so fixierte Halterung können von oben in den Raum 48 Bücher, Karten etc. eingestellt werden. Diese liegen zweckmäßig, können aber auch stehen.

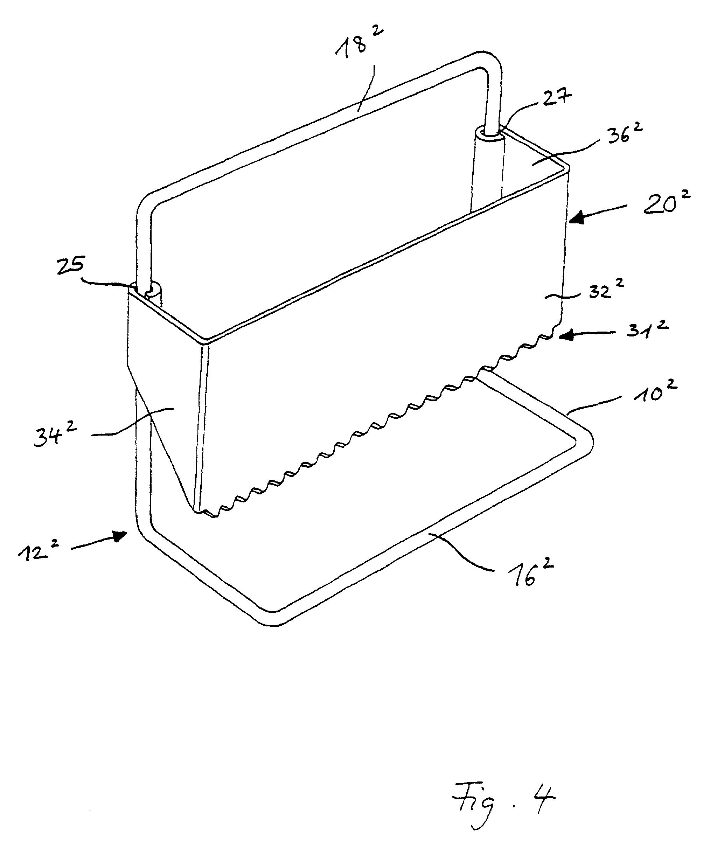

Fig. 3 zeigt eine alternative Ausgestaltung des Aufnahmeteils, das hier boxartig ist. Soweit die Teile die gleichen wie vorhergehend beschrieben sind, sind sie mit denselben Bezugszeichen bezeichnet und werden nicht erneut beschrieben. Die Aufnahmeeinrichtung 30¹ weist wiederum eine Vorderwand 32¹, durchgehende Seitenwände 34¹, 36¹ und eine Rückwand 39' auf, die sich über die Oberkanten der Vorder- und Seitenwände nach oben erstreckt. Wie im Fall der Laschenabschnitte 38, 40 sind auch hier Öffnungen 42a, 42b vorgesehen, die wiederum für einen Eingriff mit den Noppen 28a, 28b des Halterungsteils 20 oder umgekehrt vorgesehen sind.

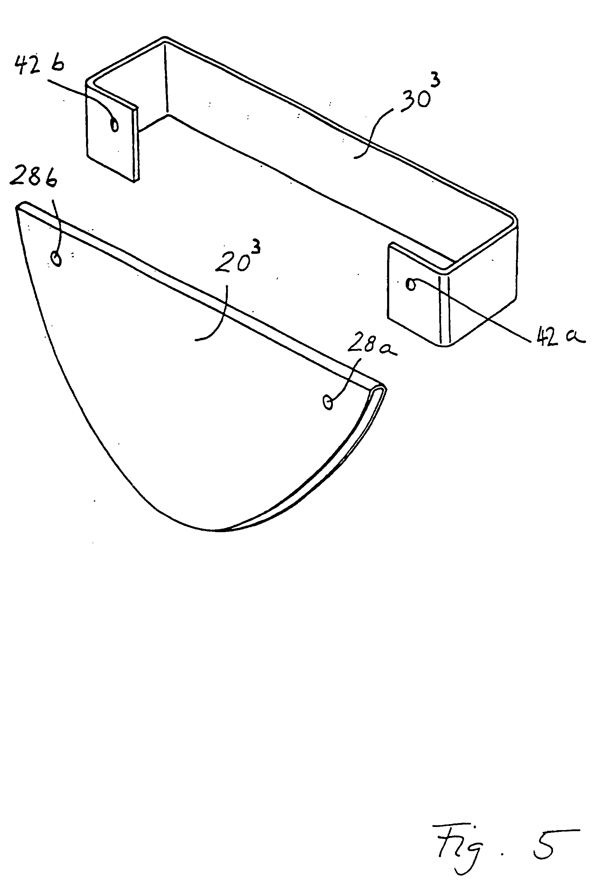

Ein weiteres Ausführungsbeispiel einer erfindungsgemäßen Halterung ist in Fig. 4 gezeigt. In diesem Fall ist das Winkelelement 10² lediglich wie im Fall des in Fig. 1 gezeigten Winkelelements 10 um eine Achse 12² zu einem ersten Schenkel 16² und einem zweiten Schenkel 18² gebogen. Die Aufnahmeeinrichtung 20² ist in diesem Fall einstückig und weist eine Vorderwand 32², Seitenwände 34² und 36² auf. An den Hinterkanten der Seitenwände 34², 36² befinden sich Schiebehülsen 25, 27, mittels derer die Aufnahmeeinrichtung 20² entlang des zweiten Schenkels 18² aufwärts und abwärts verschiebbar ist. Es kann ebenfalls aus Draht (Kunststoff oder Metall), aus Kunststoff als Spritzteil oder dergleichen hergestellt sein, beispielsweise auch mit Aussparungen, um Gewicht und Material zu sparen. Im gezeigten Ausführungsbeispiel ist es mit einer Kante mit Spitzen oder Zacken 31² zum Festkrallen in der Fußmatte versehen. Wichtig ist, daß es eine Aufnahmeeinrichtung für die Aufnahme von Büchern usw. gibt, die mit dem Winkelelement verbunden ist und vorzugsweise entlang diesem verschiebbar ist.

Fig. 5 veranschaulicht eine weitere Ausgestaltung des Halterungsteils 20³, das wie im Fall des Halterungsteils 20 ein U-Doppel-Wandteil ist. In diesem Fall ist es jedoch aus einem kreisförmig gestanzten Blechteil hergestellt. Wiederum befinden sich Öffnungen 28a, 28b im oberen Bereich zur Befestigung einer bügelförmigen Aufnahmeeinrichtung 30³, die wiederum Noppen 42a, 42b für einen Eingriff mit den Öffnungen 28a, 28b aufweist. Alternativ zu der Noppenhalterung kann auch Clipsung oder Ähnliches vorgesehen werden.

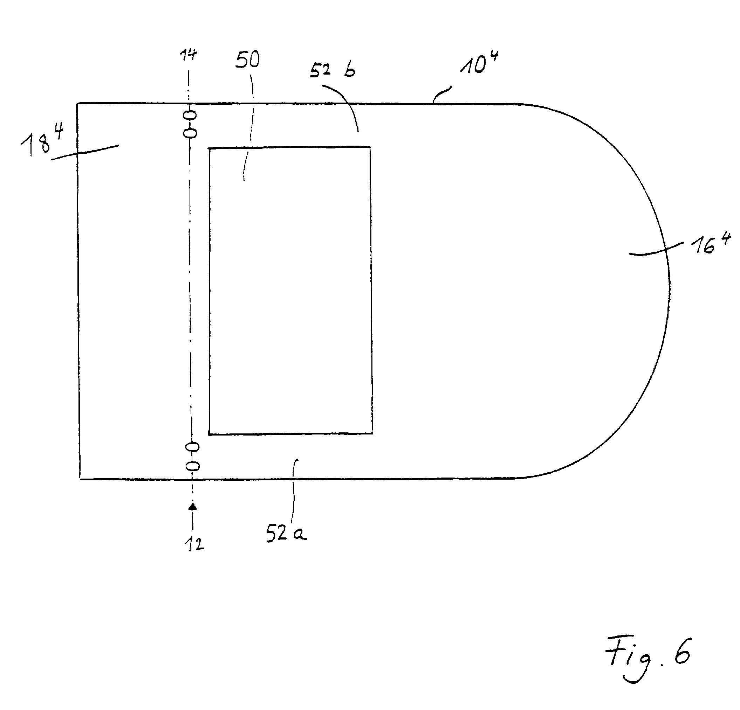

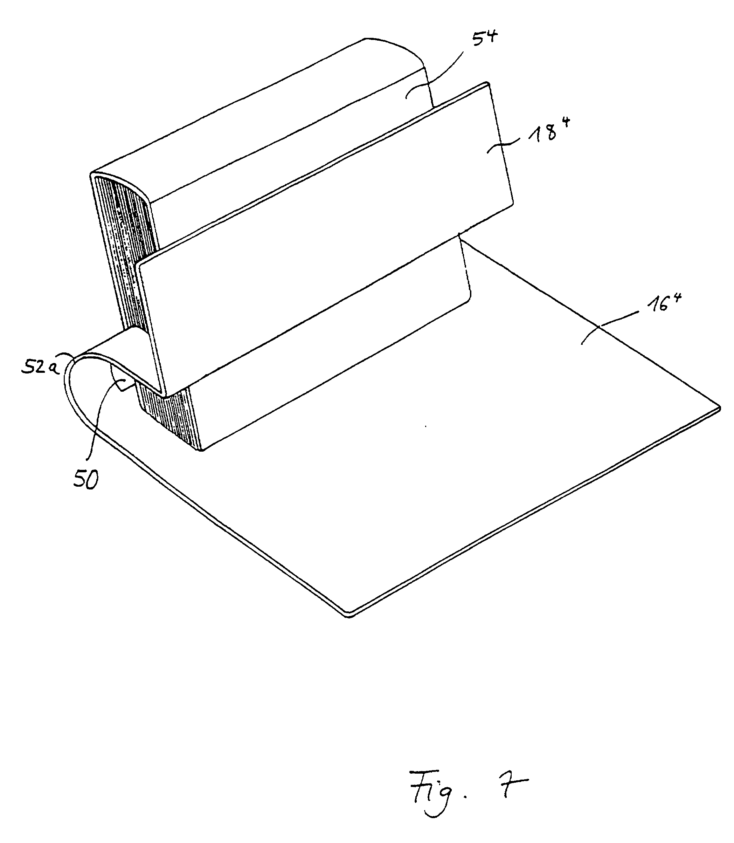

Fig. 6 und 7 zeigen noch ein Ausführungsbeispiel einer erfindungsgemäßen Halterung. Diese besteht aus einem Biege-Stanzteil 10⁴ aus Blech, das wie im Fall des Ausführungsbeispiels von Fig. 1 entlang einer Linie 12 Materialaussparungen 14 (Stanzungen) aufweist. Die Linie 12 ist wiederum eine Achse, um die die so gebildeten beiden Schenkel 16⁴, 18⁴ des Winkelelements gebogen sind. Mit Abstand zur Linie 12 erstreckt sich im ersten Schenkel 16⁴ ein rechteckiger Ausschnitt 50. Seine Abmessungen sind derart, daß ein aufzubewahrender Atlas 54, etc. durchgesteckt werden kann. Seitlich des Ausschnittes 50 befinden sich zwei Seitenstege 52a, 52b. Im Einsatz sind die Seitenstege nach oben zurückgebogen, so daß die Öffnung des Ausschnitts 50 über dem ersten Schenkel 16⁴ liegt. Der zweite Schenkel 18⁴ ist nach oben gebogen und bildet bei geeignetem Neigungswinkel eine Stützwand für beispielsweise den in der Aufnahme 50 gehalterten Atlas 54, wie in Fig. 7 gezeigt ist. Auf der anderen Seite steht der Atlas 54 frei oder kann ggf. an der Kardanwelle anliegen. Die Fixierung des Atlas 54 erfolgt in der Aufnahme 50 durch deren parallele Längskanten, die sich in Abstand von dem auf dem Boden aufliegenden Teil des ersten Schenkels 16⁴ befinden.

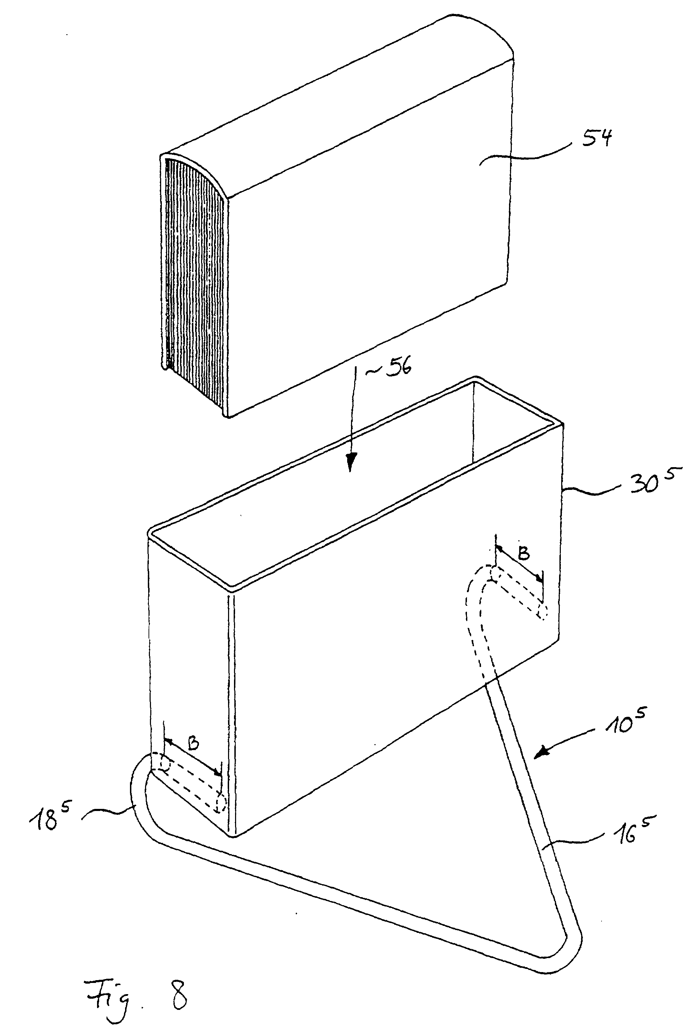

Fig. 8 zeigt eine erfindungsgemäße Halterung, deren Winkelelement 10⁵ als Drahtbügel ausgeführt ist. Der erste Schenkel 16⁵ hat gebogene Form und geht in den nach oben und vorne gebogenen zweiten Schenkel 18⁵ über. Dieser trägt als Aufnahmeeinrichtung einen Köcher 30⁵ aus Kunststoff, der zur Aufnahme eines Atlas 54 oder dergleichen vorgesehen ist. Der Pfeil 56 soll dies verdeutlichen.

In dem mittels des Doppelpfeils B gezeigten Bereich ist der Drahtbügel 10⁵ von hinten mit seinen beiden Schenkelenden in dafür vorgesehene Hülsen im Köcher 30⁵ eingeschoben. Der Kunststoffköcher kann in drei verschiedenen Alternativen eingesetzt werden: a) ohne Boden und ohne Rückwand, b) mit Boden und mit Rückwand und c) ohne Boden, aber mit Rückwand.

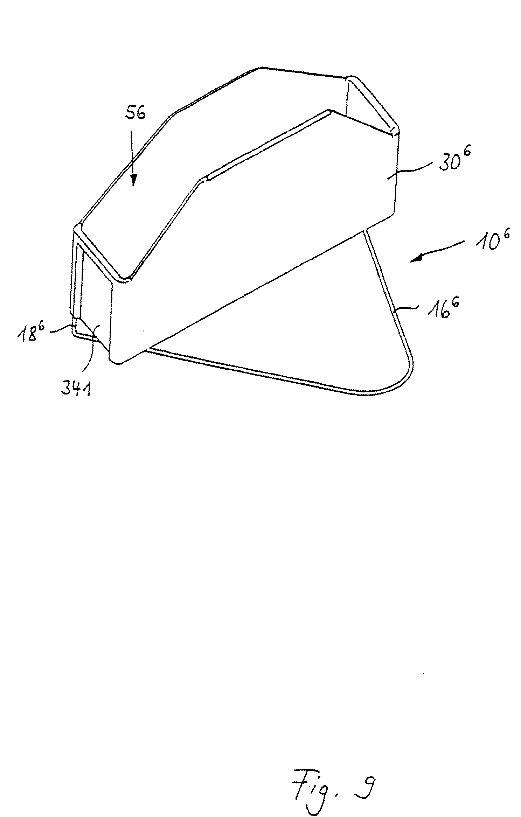

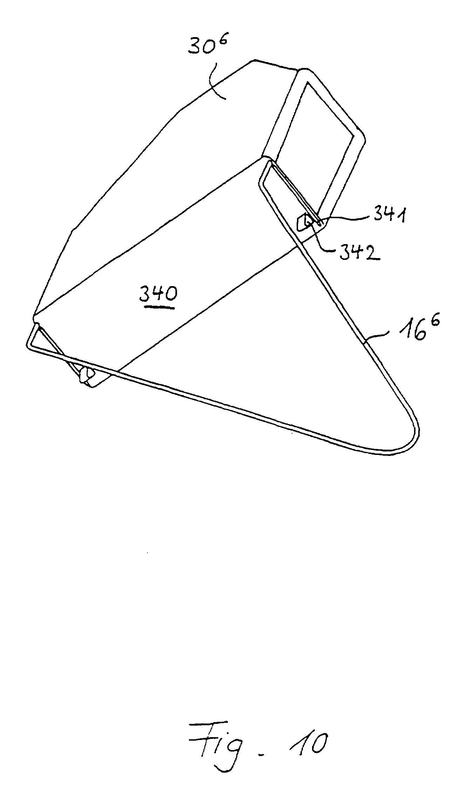

Ein weiteres derzeit bevorzugtes Ausführungsbeispiel der Erfindung zeigen Fig. 9 und 10, deren Winkelelement 10⁶ ebenfalls als Drahtbügel ausgeführt ist und einen ersten sich nach vorne erstreckenden gebogenen Schenkel 16⁶ aufweist. Dieser trägt als Aufnahmeeinrichtung einen Köcher 30⁶ zur Aufnahme von Büchern, Karten, Atlas, etc. (vgl. Pfeil 56).

Die Schenkelenden 18⁶ sind in Aufnahme- bzw. Führungsöffnungen in Form zylindrischer Bohrungen im Köcher 30⁶ eingeschoben (vgl. dazu Fig. 4). Entsprechend der Teppichdicke beispielsweise kann der Köcher 30⁶ leicht (quasi selbsttätig) in der Höhe verstellt werden. Durch Biegen des Drahtbügels 10⁶ kann der Bügelwinkel von zunächst etwa 90° zum Konsolenteil hingebogen werden, damit der Köcher bündig an der Konsolenwand anliegt.

Der Köcher 30⁶ ist an den Seitenwänden mit einer Aussparung 341 versehen. Am Boden 340 etwa unterhalb der Aussparung 341 weist er Schlitze bzw. Freimachungen zur Materialeinsparung auf. Außerdem sind am Boden 340 sich verjüngenden Haltevorsprünge 342 vorgesehen, die zur Abstützung und zur Fixierung des Köchers in der Fußmatte dienen.

## Patentansprüche

1. Nachrüstbare Halterung mit einer Aufnahme für Aufbewahrungsgut wie Bücher, Karten und dergleichen in Kraftfahrzeugen, bei der
zumindest ein Winkelelement (10) mit zwei Schenkeln (16, 18) vorgesehen ist, von denen ein erster Schenkel (16) als Auflagefuß und der zweite Schenkel (18) als Stützwand dient, und
am Winkelelement (10) eine Aufnahmeeinrichtung (20, 30; 20²; 30; 50) vorgesehen ist,
**dadurch gekennzeichnet, daß**
der erste Schenkel (16) ein als Stanzteil (10, 16⁴) oder Spritzteil oder Bügel (16, 16⁴, 16⁵) mit vorne geschlossener Form ausgeführtes Einschiebeteil zur Anordnung unter dem Teppich oder der Fußbodenmatte eines Kraftfahrzeuges ist und
die beiden Schenkel (16, 18) des Winkelelements (10) in ihrer Winkelstellung zueinander verstellbar sind.

2. Halterung nach Anspruch 1, **dadurch gekennzeichnet, daß** mit dem Winkelelement (10) ein Halterungsteil (20) für die Aufnahmeeinrichtung (30) verbunden ist.

3. Halterung nach Anspruch 2, **dadurch gekennzeichnet, daß** das Halterungsteil (20) auf dem zweiten Schenkel (18) des Winkelelements (10) verschiebbar angeordnet ist.

4. Halterung nach einem der Ansprüche 1 bis 3, dadurch g e**kennzeichnet,** daß das Winkelelement (10) einstückig ist und im Bereich der Verbindungszone der beiden Schenkel (16, 18) Materialaussparungen (14) aufweist.

5. Halterung nach einem der Ansprüche 1 bis 4, dadurch g e**kennzeichnet,** daß das Winkelelement (10²) aus Draht ist.

6. Halterung nach einem der Ansprüche 2 bis 5, dadurch g e**kennzeichnet,** daß der zweite Schenkel (18⁵) über den ersten Schenkel (16⁵) zurückgebogen ist und auf dem zurückgebogenen Bereich die Aufnahmeeinrichtung (30⁵) trägt.

7. Halterung nach einem der Ansprüche 1, 3 bis 6, **dadurch gekennzeichnet, daß** der erste Schenkel (16⁴) nahe dem Bereich der Verbindungszone als Aufnahmeeinrichtung eine Aussparung (50) aufweist, durch die das Aufbewahrungsgut (54) gesteckt werden kann, wobei die Seitenstege (52) auf beiden Seiten der Aussparung (50) über den ersten Schenkel (16⁴) zurückgebogen sind und sich der zweite Schenkel (18⁴) nach oben erstreckt.

8. Halterung nach einem der Ansprüche 2 bis 7, dadurch g e**kennzeichnet,** daß mehrere Winkelelemente vorgesehen sind, die miteinander und/oder durch die Aufnahmeeinrichtung verbunden sind.

9. Halterung nach einem der Ansprüche 2 bis 8, dadurch g e**kennzeichnet,** daß das Halterungsteil (20²) bügelförmig oder U-förmig ist.

10. Halterung nach einem der Ansprüche 2 bis 9, dadurch g e**kennzeichnet,** daß das Halterungsteil (20²) seitlich am Winkelelement (10) gehaltert ist.

11. Halterung nach einem der Ansprüche 2 bis 10, dadurch g e**kennzeichnet,** daß das Halterungsteil (20, 20³) ein U-Doppel-Wandteil ist, das auf den zweiten Schenkel (18) des Winkelelements (10) aufsetzbar ist.

12. Halterung nach einem der Ansprüche 1 bis 11, **dadurch gekennzeichnet, daß** die Aufnahmeeinrichtung (30, 32) mit einem Halterungsteil (20, 20³) verbindbar ist.

13. Halterung nach Anspruch 12, **dadurch gekennzeichnet, daß** an der Aufnahmeeinrichtung (30; 20²; 30⁶) eine Kante mit Zacken (31, 31²) oder Vorsprünge (342) vorgesehen sind, die für einen Eingriff in eine Fußmatte oder ähnliches als Rutschsicherung geeignet sind.

14. Halterung nach Anspruch 12 oder 13, **dadurch gekennzeichnet, daß** das Halterungsteil und die Aufnahmeeinrichtung (20²) einstückig sind.

15. Halterung nach einen der Ansprüche 1, 2 oder 4 bis 14, **dadurch gekennzeichnet, daß** das Winkelelement und das Halterungsteil oder das Winkelelement und die Aufnahmeeinrichtung einstückig sind.

## Claims

1. Retrofit holding device with a retainer for accommodating books, maps or the like having at least one angular component (10) with two sides (16, 18), the first side (16) serving as the support base and the second side (18) as the backing wall
and
the angular component (10) having a retaining device (20, 30; 20(2); 30; 50),**characterised in that** the first side (16) designed as a slip-in part, is either a stamping, an injection moulding or a frame (16, 16(4), 16(5) ) closed at the front, for placing under the carpet or mat in a vehicle, the angle between the two sides (16, 18) of the angular component (10) being adjustable.

2. Holding device according to Claim 1, **characterised in that** a holding part (20) for the retaining device (30) is connected with the angular component (10).

3. Holding device according to Claim 2, **characterised in that** the holding part (20) is slidably arranged on the second side (18) of the angular component (10).

4. Holding device according to one of the Claims 1 to 3, **characterised in that** the angular component (10) is in one part and has apertures (14) in its material, in the area where the two sides (16, 18) are connected.

5. Holding device according to one of the Claims 1 to 4, **characterised in that** the angular component (10(2)) is made of wire.

6. Holding device according to one of the Claims 2 to 5, **characterised in that** the second side (18(5)) is bent back over the first side (16(5)) and carries the retaining device (30(5)) on the bent back area.

7. Holding device according to Claims 1 and 3 to 6, **characterised in that** the first side (16(4)) has an opening (50), as a retaining device near the connecting area, through which the accommodated items (54) can be inserted, the side stays (52) on both sides of the opening (50) being bent back over the first side (16(4)), the second side (18(4)) extending upwards.

8. Holding device according to one of the Claims 2 to 7, **characterised in that** several angular components connected with one another and/or by the retaining device are provided.

9. Holding device according to one of the Claims 2 to 8, **characterised in that** the holding part (20(2)) is bow-shaped or U-shaped.

10. Holding device according to one of the Claims 2 to 9, **characterised in that** the holding part (20(2)) is held at the angular component (10) at the sides.

11. Holding device according to one of the Claims 2 to 10, **characterised in that** the holding part (20, 20(3)) is a double wall U part which can be placed over the second side (18) of the angular component (10).

12. Holding device according to one of the Claims 1 to 11, **characterised in that** the retaining device (30, 32) is connectable with a holding part (20, 20(3)).

13. Holding device according to Claim 12, **characterised in that** the retaining device (30; 20(2); 30(6)) has an edge with serrations (31, 31(2)) or protrusions (342) which are suitable to engage in a foot mat or a similar non-slip item.

14. Holding device according to Claim 12 or 13, **characterised in that** the holding part and the retaining device (20(2)) are in one part.

15. Holding device according to one of the Claims 1, 2 or 4 to 14, **characterised in that** the angular component and the holding part or the angular component and the retaining device are in one part.

## Revendications

1. Fixation pouvant être montée a postériori dans des véhicules automobiles, comportant un réceptacle pour des produits, tels que des livres, des cartes ou similaires, dans laquelle
il est prévu au moins un élément en équerre (10) avec deux ailes (16, 18), parmi lesquelles une première aile (16) sert de pied d'appui et la seconde aile (18) sert de paroi de support et
un réceptacle (20, 30 ;20² ; 30 ; 50) est prévu sur l'élément en équerre (10),
**caractérisée**
**en ce que** la première aile (16) est une patte réalisée sous forme de pièce découpée à la presse (10, 16⁴) ou de pièce moulée ou d'arceau (16, 16⁴, 16⁵) fermé vers l'avant, destinée à être glissée sous le tapis ou la moquette d'un véhicule automobile et
**en ce que** la position angulaire relative des deux ailes (16, 18) de l'élément en équerre (10) est réglable.

2. Fixation selon la revendication 1, **caractérisée en ce qu'**une pièce de fixation (20) pour le réceptacle (30) est liée à l'élément en équerre (10).

3. Fixation selon la revendication 2, **caractérisée en ce que** la pièce de fixation (20) est montée coulissante sur la seconde aile (18) de l'élément en équerre (10).

4. Fixation selon une des revendications 1 à 3, **caractérisée en ce que** l'élément en équerre (10) est réalisé d'une pièce et présente des découpes (14) dans la région de la zone de liaison des deux ailes (16, 18).

5. Fixation selon une des revendications 1 à 4, **caractérisée en ce que** l'élément en équerre (10²) est en fil métallique.

6. Fixation selon une des revendications 2 à 5, **caractérisée en ce que** la seconde aile (18⁵) est repliée au-dessus de la première aile (16⁵) et porte le réceptacle (30⁵) au niveau de la partie repliée.

7. Fixation selon une des revendications 1, 3 à 6, **caractérisée en ce que** la première aile (16⁴), à proximité de la région de la zone de liaison comporte comme réceptacle une découpe (50) dans laquelle le produit (54) peut être inséré, les parties de liaison (52) latérales des deux côtés de la découpe (50) étant repliées sur la première aile (16⁴) et la seconde aile (18⁴) s'étendant vers le haut.

8. Fixation selon une des revendications 2 à 7, **caractérisée en ce qu'**il est prévu plusieurs éléments en équerre, qui sont liés entre eux et/ou sont reliés par le réceptacle.

9. Fixation selon une des revendications 2 à 8, **caractérisée en ce que** la pièce de fixation (20²) a une forme d'étrier ou une forme de U.

10. Fixation selon une des revendications 2 à 9, **caractérisée en ce que** la pièce de fixation (20²) est fixée latéralement à l'élément en équerre (10).

11. Fixation selon une des revendications 2 à 10, **caractérisée en ce que** la partie de fixation (20, 20³) est une partie de paroi double en forme de U, qui peut être accrochée sur la deuxième aile de l'élément en équerre (10).

12. Fixation selon une des revendications 1 à 11, **caractérisée en ce que** le réceptacle (30, 32) peut être relié à une partie de fixation (20, 20³).

13. Fixation selon la revendication 12, **caractérisée en ce qu'**il est prévu sur le réceptacle (30 ; 20² ; 30⁶) un bord avec des creux (31, 31²) ou des saillies (342) qui sont adaptés pour accrocher dans un tapis ou similaire en tant que sécurité au glissement.

14. Fixation selon la revendication 12 ou 13, **caractérisée en ce que** la partie de fixation et le réceptacle (20²) sont formés d'une pièce

15. Fixation selon une des revendications 1, 2 ou 4 à 14, **caractérisée en ce que** l'élément en équerre et la partie de fixation ou l'élément en équerre et le réceptacle sont formés d'une pièce.
